# EUROPEAN PATENT APPLICATION

(11) **EP 4 792 637 A1**
(43) Date of publication of application: **19.08.2026**
(21) Application number: 25189229.5
(22) Date of filing: 14.07.2025
(51) Int. Cl.: A01D 34/68

(54) **WALK-BEHIND WORKING MACHINE**

(30) Priority: 17.02.2025 CN 202510173763
(71) Applicant: Nanjing Chervon Industry Co., Ltd., Nanjing, Jiangsu 211106 (CN)
(72) Inventor: YAMAOKA, Toshinari, Nanjing (CN); LIU, Mingxing, Nanjing (CN); WANG, Hao, Nanjing (CN)
(74) Representative: Sun, Yiming

(57) **Abstract**

A walk-behind working machine includes a traveling assembly, a working assembly, and a parking module. The traveling assembly includes a traveling wheel set and a traveling motor for driving the traveling wheel set. The traveling wheel set includes axles and wheels disposed on the axles. The working assembly includes a working attachment and a working motor for driving the working attachment. The parking module is configured to apply a braking force to the axle.

## Description

### TECHNICAL FIELD

The present application relates to a power tool and, in particular, to a walk-behind working machine.

### BACKGROUND

A walk-behind working machine in the related art, specifically a mower with two cutting decks, is provided with a parking structure. A parking trigger is disposed on the right side of a joystick, and the parking trigger and a self-propelled pull rod are mechanically interlocked. When parking is required, the self-propelled pull rod must be released before the parking trigger is operated. The operation structure is complicated, not facilitating quick and convenient parking.

### SUMMARY

A walk-behind working machine includes: a traveling assembly including a traveling wheel set and a traveling motor for driving the traveling wheel set, where the traveling wheel set includes axles and wheels disposed on the axles; a working assembly including a working attachment and a working motor for driving the working attachment; and a parking module configured to apply a braking force to the axle.

In some examples, a transmission mechanism is further included, where the transmission mechanism is disposed between the traveling motor and the traveling wheel set and used for transmitting the power of the traveling motor to the traveling wheel set.

In some examples, the transmission mechanism includes a gearbox, a first clutch, and a second clutch, and at least one of the first clutch and the second clutch is disposed on the outer side of the gearbox.

In some examples, the first clutch is disposed on the outer side of the gearbox, and the parking module is disposed between the first clutch and a first wheel.

In some examples, the transmission mechanism includes a gearbox, a first clutch, and a second clutch, and the first clutch and the second clutch are both disposed inside the gearbox.

In some examples, the parking module is disposed between the gearbox and a first wheel; or the parking module is disposed between the gearbox and a second wheel.

In some examples, two traveling motors are provided and are a first traveling motor and a second traveling motor, the first traveling motor is used for driving the first wheel, and the second traveling motor is used for driving the second wheel; and the parking module is used for outputting the braking force or a wheel set braking signal to brake the first wheel or the second wheel.

In some examples, the first traveling motor is a wheel hub motor or a wheel-side motor, and the second traveling motor is a wheel hub motor or a wheel-side motor.

In some examples, the parking module includes an operating member configured to be operated by a user to apply the braking force to the axle or output a wheel set braking signal.

In some examples, the parking module further includes a parking switch, and the operating member is configured to be capable of triggering the parking switch to output a shutdown signal or a power-off signal to the traveling motor.

In some examples, the parking module further includes a friction plate, the operating member is configured to force the friction plate to press against a brake disc, and the brake disc is disposed on the axle.

In some examples, the parking module further includes an electromagnetic braking mechanism for performing a parking action according to the wheel set braking signal to lock the axle.

In some examples, a handle device is further included, where the handle device includes a grip for a user to hold and a self-propelled switch, and the self-propelled switch is used for outputting a start signal to the traveling motor.

In some examples, the working attachment includes a mowing assembly or a snow removal assembly.

In some examples, the working attachment includes a mowing assembly, the walk-behind working machine further includes a power supply assembly for supplying power to the working motor and the traveling motor, and the weight of the walk-behind working machine is greater than or equal to 45 kg.

The present application adopts the technical solutions below. A walk-behind working machine includes: a traveling assembly including a traveling wheel set and a traveling motor for driving the traveling wheel set, where the traveling wheel set includes at least a first wheel and a second wheel; and a handle device including a grip for a user to hold and a self-propelled switch, where the self-propelled switch is used for outputting a start signal to the traveling motor. Two traveling motors are provided and are a first traveling motor and a second traveling motor, the first traveling motor is used for driving the first wheel, and the second traveling motor is used for driving the second wheel. The walk-behind working machine further includes a parking module for outputting a braking force or a wheel set braking signal to brake the first wheel or the second wheel.

In some examples, the first traveling motor is a wheel hub motor or a wheel-side motor, and the second traveling motor is a wheel hub motor or a wheel-side motor.

In some examples, the parking module is disposed between the first traveling motor and the first wheel.

The present application adopts the technical solutions below. A walk-behind working machine includes: a traveling assembly including a traveling wheel set and a drive assembly for driving the traveling wheel set, where the traveling wheel set includes at least a first wheel and a second wheel; a transmission mechanism including a gearbox and a first clutch disposed on a first power transmission path between the drive assembly and the first wheel to achieve transmission, where the first clutch is configured to disengage or engage the first power transmission path; and a parking module configured to apply a braking force to the traveling assembly. The first clutch is disposed on the outer side of the gearbox.

In some examples, the parking module is disposed between the first clutch and the first wheel, and the parking module is used for applying the braking force to a first axle where the first wheel is located.

### BRIEF DESCRIPTION OF DRAWINGS

FIG. 1 is a first structural view of a walk-behind working machine according to the present application.
FIG. 2 is a second structural view of a walk-behind working machine according to the present application.
FIG. 3 is a partial structural view of a walk-behind working machine according to the present application.
FIG. 4 is a structural view of a traveling assembly, a parking module, and a transmission mechanism according to the present application.
FIG. 5 is a structural view of a parking module and a transmission mechanism according to the present application.
FIG. 6 is a sectional view of a traveling assembly, a parking module, and a transmission mechanism according to the present application.
FIG. 7 is a partial sectional view of a traveling assembly, a parking module, and a transmission mechanism according to the present application.
FIG. 8 is a partial structural view of a parking module according to the present application.
FIG. 9 is a structural view illustrating that an operating member of a parking module is at a parking position according to the present application.
FIG. 10 is a structural view illustrating that an operating member of a parking module is at an unlocking position according to the present application.
FIG. 11 is a first structural view of a second axle, a limiting pin, and a first clutch according to the present application.
FIG. 12 is a first side view of a second axle, a limiting pin, and a first clutch according to the present application.
FIG. 13 is a second structural view of a second axle, a limiting pin, and a first clutch according to the present application.
FIG. 14 is a second side view of a second axle, a limiting pin, and a first clutch according to the present application.
FIG. 15 is a schematic view illustrating that a first clutch and a second clutch are both located inside a gearbox according to the present application.
FIG. 16 is a structural view of a steel wire rope, a joint, a wire arrangement groove, and pressing plates according to the present application.
FIG. 17 is a structural view illustrating that a steel wire rope mates with a housing according to the present application.
FIG. 18 is a partial structural view of a steel wire rope, a joint, a wire arrangement groove, and pressing plates according to the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "calculate", "judge", "control", "determine", "identify", etc. refer to the operations and processes of a computer system or similar electronic computing device (e.g., a controller, a processor, etc.).

In different embodiments of this application, the same or corresponding parts are marked with the same reference numerals.

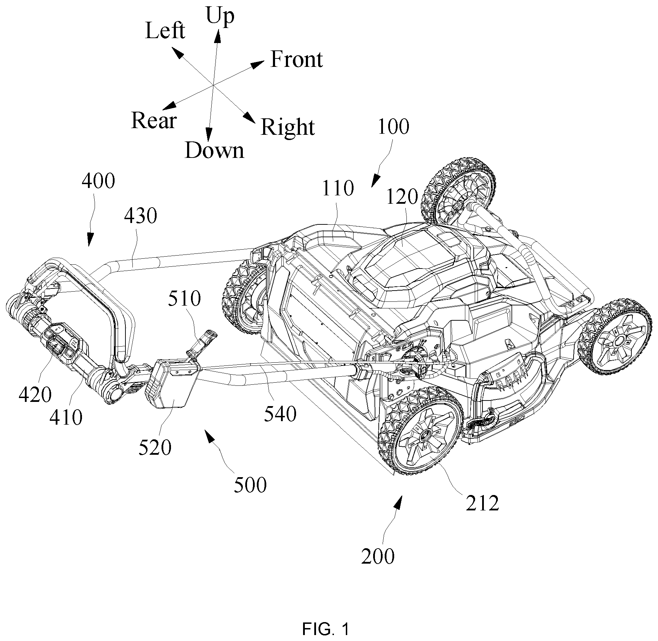

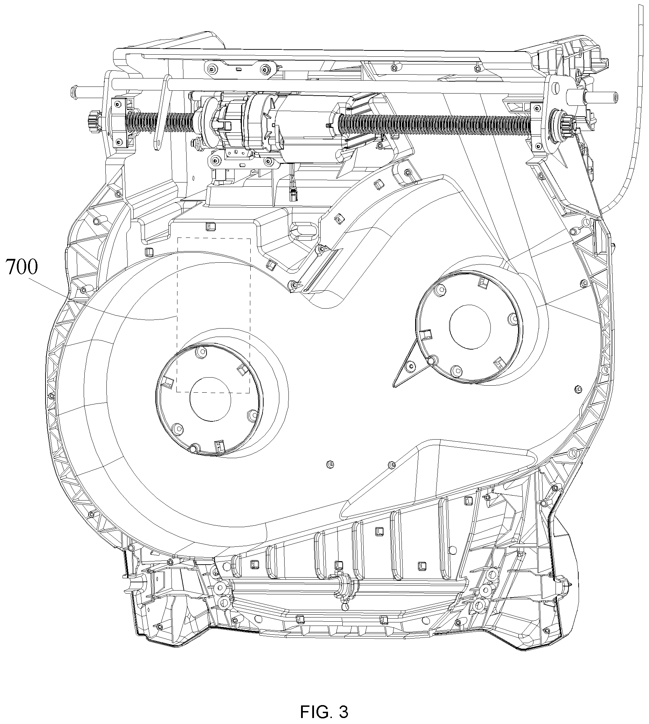

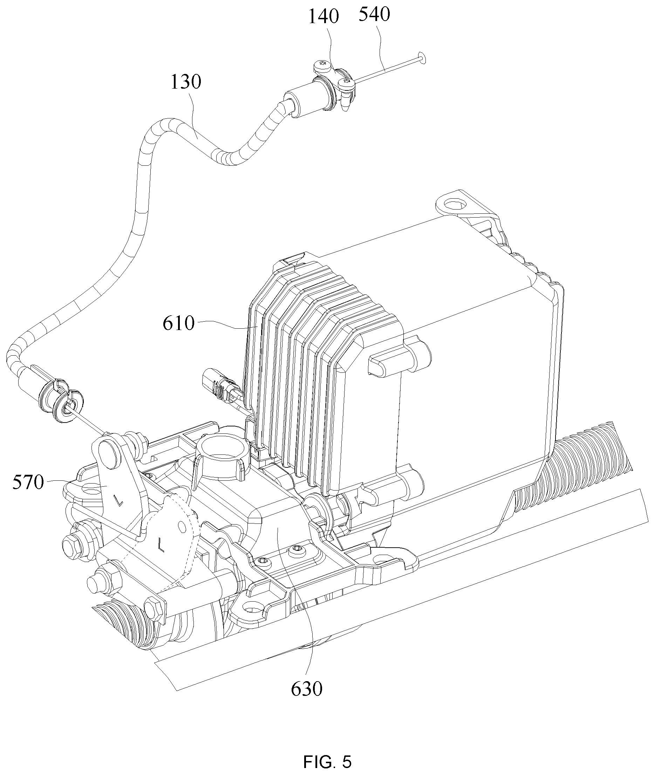

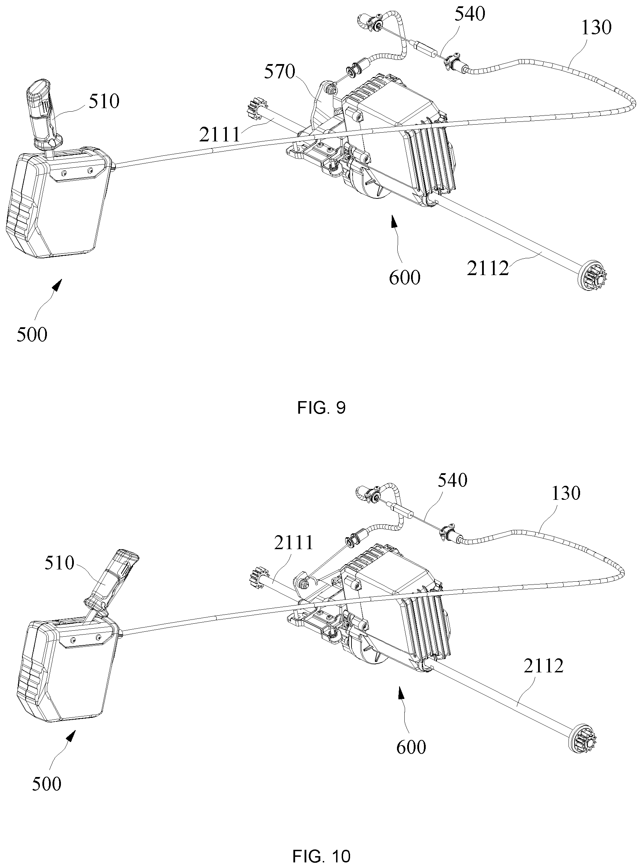

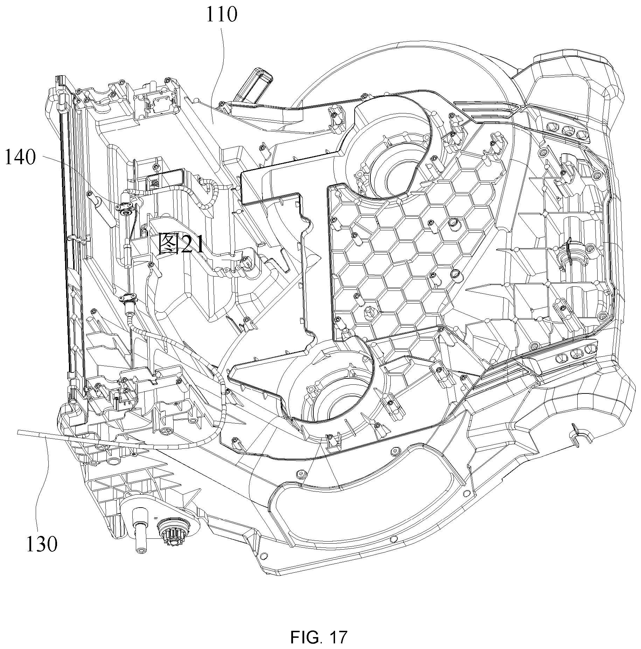

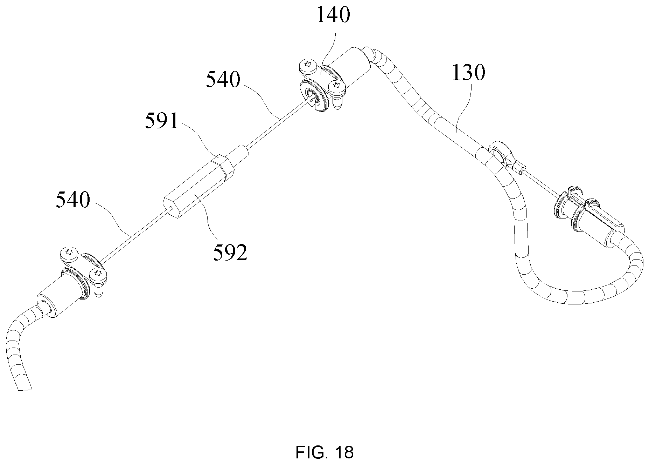

In this application, the terms "computing", "judging", "controlling", "determining", "recognizing" and the like refer to the operations and processes of a computer system or similar electronic computing device (e.g., controller, processor, etc.).A walk-behind working machine provided in the present application may be a walk-behind device such as a mower, a snow thrower, or a push multi-head tool. Referring to FIGS. 1 to 18, a mower is used as an example of a walk-behind working machine. The walk-behind working machine includes a body 100, a traveling assembly 200, a working assembly 300, and a handle device 400. The traveling assembly 200, the working assembly 300, and the handle device 400 are connected to the body 100.

The traveling assembly 200 includes a traveling wheel set 210 and a drive assembly for driving the traveling wheel set 210. The traveling wheel set 210 includes axles 211 and wheels 212 disposed on the axles 211. The number of the wheels 212 may be set according to actual requirements. For example, four wheels 212 are provided and divided into two front wheels and two rear wheels. For example, the traveling wheel set 210 includes at least a first wheel 2121 and a second wheel 2122, where the first wheel 2121 and the second wheel 2122 are both rear wheels, and the rear wheels serve as drive wheels for driving the walk-behind working machine to travel.

In some examples, the first wheel 2121 and the second wheel 2122 share a common axle 211. In some examples, the first wheel 2121 is disposed on a first axle 2111, and the second wheel is disposed on a second axle 2112. The first axle 2111 is drivingly connected to the second axle 2112, or the first axle 2111 and the second axle 2112 are separately provided.

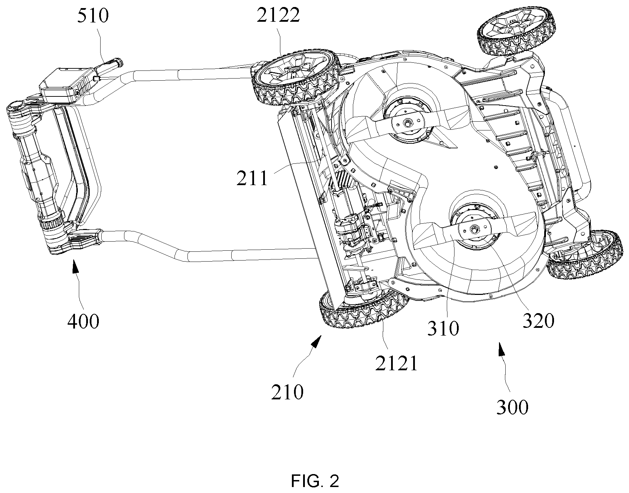

The working assembly 300 includes working attachments 310 and working motors 320 for driving the working attachments 310. In some examples, the working attachment 310 includes a mowing assembly. In some examples, the working attachment 310 includes a snow removal assembly. Referring to FIG. 2, the mowing assembly is a structure with two cutting decks.

In some examples, the drive assembly includes a traveling motor 220, and the traveling motor 220 and the working motor 320 are separately provided, that is, the traveling wheel set 210 and the working attachment 310 are driven separately. In some examples, the drive assembly is a transmission assembly, and the working motor 320 drives the traveling wheel set 210 through the transmission assembly, that is, the traveling wheel set 210 and the working attachment 310 share the working motor 320.

In some examples, the first wheel 2121 and the second wheel 2122 share one traveling motor 220. For example, the first axle 2111 and the second axle 2112 are connected to each other, and the traveling motor 220 drives the first axle 2111 or the second axle 2112 to rotate. In some examples, two traveling motors 220 are provided, one traveling motor 220 is used for driving the first wheel 2121, and the other traveling motor 220 is used for driving the second wheel 2122.

The handle device 400 is disposed on the rear side of the body 100. The handle device 400 includes a grip 410 and a self-propelled switch 420. The grip 410 is held by the user to operate the walk-behind working machine to travel. The self-propelled switch 420 is configured to output a start signal to the traveling motor 220. For example, the self-propelled switch 420 can be triggered to output the start signal to the traveling motor 220. The self-propelled switch 420 may be toggled, pressed, or rotated by the user to move between an on position and an off position. For example, the self-propelled switch 420 is triggered by pressing the self-propelled switch 420, that is, the self-propelled switch 420 is turned on and outputs the start signal to the traveling motor 220; and the self-propelled switch 420 is turned off by pressing the self-propelled switch 420 again.

The handle device 400 further includes connecting rods 430, an end of the connecting rod 430 is connected to the body 100, and the other end of the connecting rod 430 is connected to the grip 410. By providing the connecting rods 430, during the process in which the user holds the grip 410 and travels with the walk-behind working machine, a safe distance is maintained between the user and the body 100, thereby ensuring safety.

The walk-behind working machine further includes a parking module 500 configured to be operated by the user to apply a braking force to the traveling wheel set 210 or output a wheel set braking signal. The parking module 500 is further configured to output a shutdown signal or a power-off signal to the traveling motor 220.

In some examples, the parking module 500 is configured to apply a braking force to the traveling assembly 200. For example, the parking module 500 is configured to apply a braking force to the axle 211. When parking is required, the axle 211 is braked through the parking module 500, and the operation structure is simple, facilitating quick and convenient parking. For the mower, the mounting position of the parking module 500 does not interfere with the grass discharge from a grass discharge port.

In some examples, the parking module 500 includes an operating member 510 configured to be operated by the user to apply a braking force to the axle 211 or output a wheel set braking signal. The operating member 510 may be a toggle member, a pressing member, or a rotary member, and the user may operate the operating member 510 by toggling, pressing, or rotating the operating member 510.

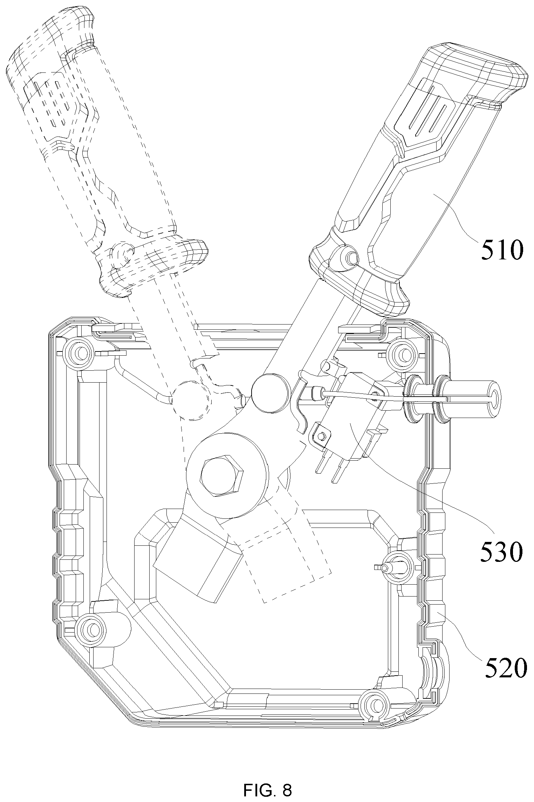

Referring to FIGS. 8 to 10, the operating member 510 can move between a parking position and an unlocking position, and the user may manually toggle the operating member 510 to place the operating member 510 at the parking position or the unlocking position. The parking module 500 includes an operation box 520, part of the operating member 510 is disposed in the operation box 520, and the operation box 520 is connected to the handle device 400. Referring to FIGS. 1 and 2, the operation box 520 is disposed on the right side of the handle device 400 to facilitate operation by the user's right hand.

In some examples, the parking module 500 further includes a parking switch 530, and the parking switch 530 can be triggered to output a shutdown signal or a power-off signal to the traveling motor 220 to shut down the traveling motor 220.

In some examples, the parking switch 530 is triggered by the operating member 510, that is, the operating member 510 is configured to be capable of triggering the parking switch 530 to output a shutdown signal or a power-off signal to the traveling motor 220. When the operating member 510 moves from the unlocking position to the parking position, the operating member 510 triggers the parking switch 530. When the operating member 510 moves from the parking position to the unlocking position, the parking switch 530 is in a non-triggered state, that is, the parking switch 530 is turned off.

In some examples, the parking switch 530 is set at the parking position or the unlocking position. When the operating member 510 moves from the unlocking position to the parking position, the operating member 510 triggers the parking switch 530, and the display screen displays the P gear. When the operating member 510 moves from the parking position to the unlocking position, the parking switch 530 is in the non-triggered state, and the display screen displays the D gear or is blank.

In some examples, the parking switch 530 is disposed on an operation panel or a chassis, and the user may manually trigger the parking switch 530.

The parking switch 530 has the highest priority. When the parking switch 530 is turned off, the traveling motor 220 stops operating regardless of whether the self-propelled switch 420 is turned on or off. The parking switch 530 is disposed at a position where the operating member 510 can trigger the parking switch 530 so that in an emergency, a shutdown signal or a power-off signal can be outputted to the traveling motor 220 simply by pulling the operating member 510 to trigger the parking switch 530 without the need for turning off the self-propelled switch 420.

The parking module 500 further includes a steel wire rope 540, an end of the steel wire rope 540 is connected to the operating member 510, and the other end of the steel wire rope 540 is used for achieving mechanical parking. Therefore, when the user pulls the operating member 510 to the parking position, not only is the parking switch 530 triggered to output a shutdown signal or a power-off signal to the traveling motor 220, but also mechanical parking is achieved.

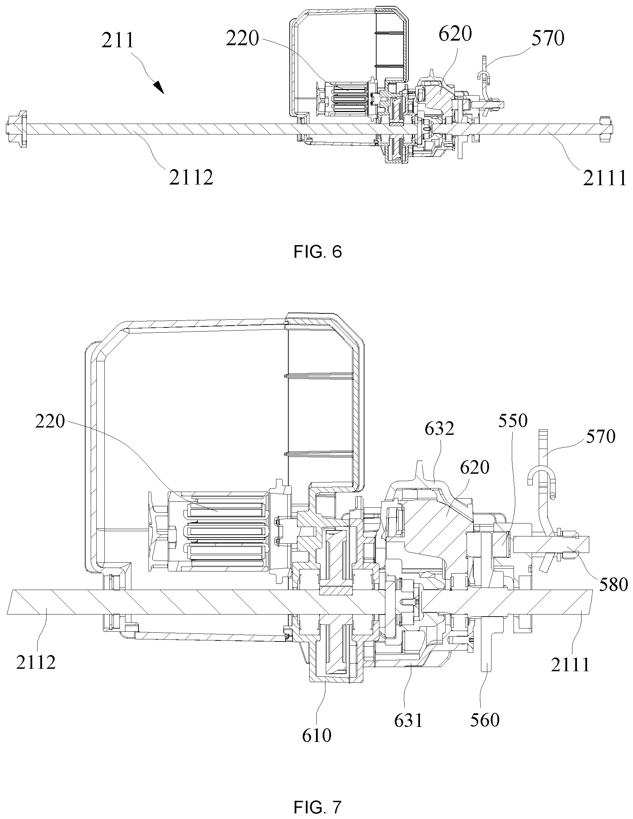

In some examples, referring to FIGS. 6 and 7, the parking module 500 further includes a friction plate 550, the operating member 510 is configured to force the friction plate 550 to press against a brake disc 560, and the brake disc 560 is disposed on the axle 211. The friction plate 550 presses against the brake disc 560 to stop the rotation of the brake disc 560. Since the brake disc 560 is disposed on the axle 211, the axle 211 stops rotating.

In some examples, an end of the steel wire rope 540 facing away from the operating member 510 is connected to a toggle 570, and the toggle 570 is sleeved on a pin shaft 580. When the user pulls the operating member 510, the toggle 570 can be driven by the steel wire rope 540 to rotate around the pin shaft 580 to force the friction plate 550 to press against the brake disc 560. For example, the brake disc 560 is disposed on the first axle 2111.

In some examples, an end of the steel wire rope 540 facing away from the operating member 510 is connected to a toggle 570, and the toggle 570 is sleeved on a pin shaft 580. When the user pulls the operating member 510, the toggle 570 can be driven by the steel wire rope 540 to rotate around the pin shaft 580 to force a locking pin to move to lock the first axle 2111.

The body 100 includes a housing 110, and part of the parking module 500 is disposed in the housing 110. For example, referring to FIG. 1 and FIGS. 16 to 18, part of the steel wire rope 540 enters the housing 110 along the bottom of a maintenance cover 120 of the body 100 and extends within a wire arrangement groove 130 in the housing 110 to avoid components such as circuit boards. Multiple pressing plates 140 are disposed along the extension direction of the wire arrangement groove 130. The pressing plates 140 are connected to the housing 110 and tightly press the wire arrangement groove 130.

In some examples, the steel wire rope 540 is provided in at least two sections, and two adjacent sections of the steel wire rope 540 are detachably connected via a joint 590. The joint 590 is provided to facilitate installation, maintenance, and regulation. Optionally, the joint 590 includes a first joint portion 591 and a second joint portion 592 that are detachably connected, the first joint portion 591 is connected to a section of the steel wire rope 540, the second joint portion 592 is connected to the other section of the steel wire rope 540, and the first joint portion 591 and the second joint portion 592 may be threadedly connected.

In some examples, the parking module 500 further includes an electromagnetic braking mechanism for performing a parking action according to a wheel set braking signal to lock the axle 211. For example, the electromagnetic braking mechanism is powered off after receiving the wheel set braking signal so that a friction member operates to lock the axle 211 to achieve braking. The friction member may be a drum brake. The friction member operates to lock the first axle 2111.

The walk-behind working machine further includes a transmission mechanism 600 disposed between the traveling motor 220 and the traveling wheel set 210 and used for transmitting the power of the traveling motor 220 to the traveling wheel set 210. To achieve the differential speed, a clutch module is generally provided for each of the left wheel and the right wheel.

In some examples, the transmission mechanism 600 includes a gearbox 610 and a first clutch 620 disposed on a first power transmission path between the traveling motor 220 and the first wheel 2121 to achieve transmission, and the first clutch 620 is configured to disengage or engage the first power transmission path. When the first clutch 620 disengages the first power transmission path, the power of the traveling motor 220 cannot be transmitted to the first wheel 2121; and when the first clutch 620 engages the first power transmission path, the power of the traveling motor 220 can be transmitted to the first wheel 2121.

The transmission mechanism 600 further includes a second clutch disposed on a second power transmission path between the traveling motor 220 and the second wheel 2122 to achieve transmission, and the second clutch is configured to disengage or engage the second power transmission path. When the second clutch disengages the second power transmission path, the power of the traveling motor 220 cannot be transmitted to the second wheel 2122; and when the second clutch engages the second power transmission path, the power of the traveling motor 220 can be transmitted to the second wheel 2122.

In some examples, at least one of the first clutch 620 and the second clutch is disposed on the outer side of the gearbox 610. Compared with placing the clutch inside the gearbox 610, the clutch is disposed on the outer side of the gearbox 610, thereby facilitating maintenance, reducing the dimension of the gearbox 610, and reducing the occupied space.

In this example, the first clutch 620 is disposed on the outer side of the gearbox 610, and the parking module 500 is disposed between the first clutch 620 and the first wheel 2121. The parking module 500 is used for applying a braking force to the first axle 2111 where the first wheel 2121 is located. The second clutch may be disposed at the second wheel 2122.

In some examples, the gearbox 610 includes a box body, and a cover of the box body can be opened to facilitate the installation of components such as gears inside the gearbox 610. The first clutch 620 is disposed in a housing 630. The housing 630 includes a detachable housing 631 and a housing cover 632. The housing cover 632 can be opened to facilitate the installation of the first clutch 620 in the housing 630. For example, the housing cover 632 and the housing 631 are fastened by multiple screws. During installation, the through hole on the housing cover 632 is aligned with the threaded hole on the housing 631, and then the screw passes through the through hole and is threadedly connected to the threaded hole to achieve locking.

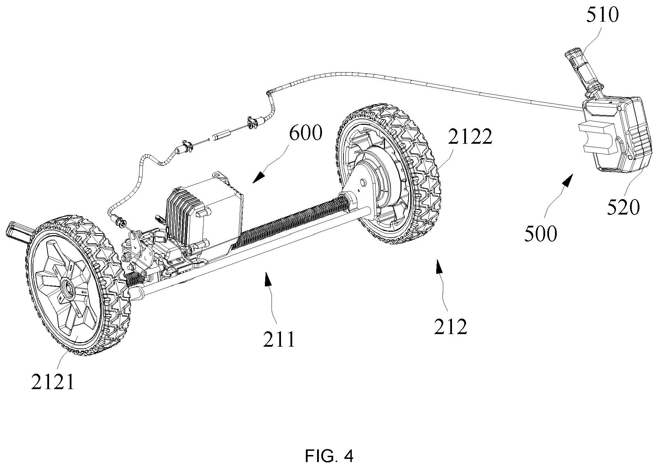

Referring to FIGS. 4 to 14, the first clutch 620 is disposed on the first axle 2111, the gearbox 610 is disposed on the second axle 2112 where the second wheel 2122 is located, the second axle 2112 and the first axle 2111 are disposed coaxially, a limiting pin 640 is disposed on the second axle 2112, and the limiting pin 640 is located in a limiting groove 621 of the first clutch 620.

The operating member 510 is configured to be operated by the user to apply a braking force to the first axle 2111 and/or output a wheel set braking signal. Through the cooperation between the limiting pin 640 and the limiting groove 621, after the first axle 2111 is braked, the braking force can be transmitted to the second axle 2112 through the limiting pin 640 so that the second axle 2112 is braked.

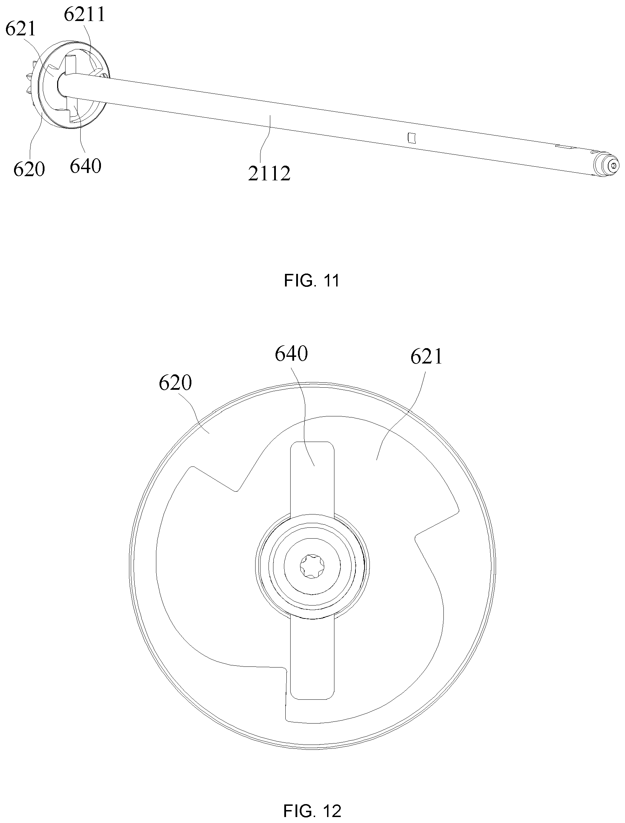

During the normal self-propelled operation, the self-propelled switch 420 is turned on, the operating member 510 is at the unlocking position, the traveling motor 220 is started, and the second axle 2112 is driven to rotate through the gearbox 610. The direction of rotation is clockwise in FIG. 12. The limiting pin 640 on the second axle 2112 rotates with the second axle 2112 until the limiting pin 640 abuts against a step 6211 in the limiting groove 621 of the first clutch 620 as shown in FIG. 12, thereby driving the first clutch 620 to rotate, achieving the synchronous rotation between the first axle 2111 and the second axle 2112, and achieving the self-propelled operation of the first wheel 2121 and the second wheel 2122.

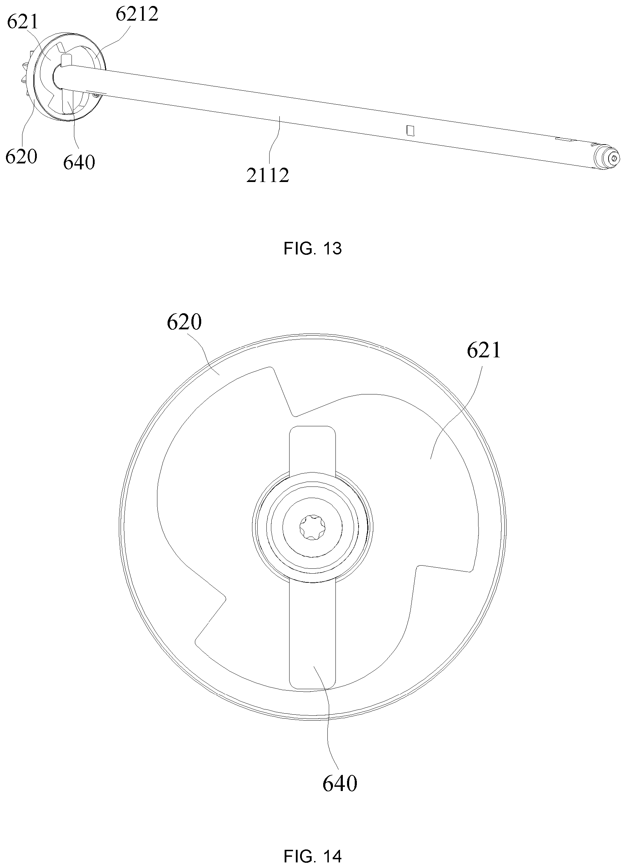

When parking is required, the user pulls the operating member 510 to the parking position. During the process in which the operating member 510 moves to the parking position, the toggle 570 is driven by the steel wire rope 540 to rotate around the pin shaft 580 to force the friction plate 550 to press against the brake disc 560. Since the brake disc 560 and the first axle 2111 are connected through a spline connection, the brake disc 560 stops rotating, causing the first axle 2111 to stop rotating. The first axle 2111 stops rotating, causing the first clutch 620 to stop rotating. Since the limiting pin 640 abuts against the step 6211 in the limiting groove 621 of the first clutch 620 as shown in FIG. 13, the first clutch 620 stops rotating to force the traveling motor 220 into a locked-rotor protection state, thereby shutting down the traveling motor 220.

In some examples, the operating member 510 can trigger the parking switch 530 when moving to the parking position. The parking switch 530 outputs a shutdown signal or a power-off signal to the traveling motor 220 to shut down the traveling motor 220, thereby achieving electronic shutdown and mechanical parking at the same time to ensure parking stability.

When the second axle 2112 rotates counterclockwise, the direction of rotation is the counterclockwise direction in FIG. 14, and the limiting pin 640 on the second axle 2112 rotates with the second axle 2112 and slides along an arc portion 6212 in the limiting groove 621 of the first clutch 620. The limiting effect of the arc portion 6212 makes the limiting pin 640 move along the radial direction of the second axle 2112. Therefore, when the traveling motor 220 drives the second axle 2112 to rotate counterclockwise, power is not transmitted to the first axle 2111, and steering and other operations can be achieved.

The walk-behind working machine further includes a controller configured to control the motor to shut down based on output signals from the parking switch 530 and/or the self-propelled switch 420. In some examples, the controller is configured to control the traveling motor 220 to shut down based on the output signal from the parking switch 530. When the parking switch 530 is turned off, the traveling motor 220 stops operating regardless of whether the self-propelled switch 420 is turned on or off. In some examples, the controller is configured to control the traveling motor 220 to shut down based on the output signals from the parking switch 530 and the self-propelled switch 420. When the parking switch 530 is in a triggered state and the self-propelled switch 420 is in an off state, the traveling motor 220 shuts down. In some examples, the self-propelled function can be implemented only when the parking switch 530 is in the triggered state and the self-propelled switch 420 is in an on state.

In some examples, the parking switch 530 is a signal switch. The parking switch 530 has a simple structure and occupies little space.

In some examples, two traveling motors 220 are provided, which are a first traveling motor and a second traveling motor. The first traveling motor is used for driving the first wheel 2121, and the second traveling motor is used for driving the second wheel 2122. The parking module 500 is used for outputting a braking force or a wheel set braking signal to brake the first wheel 2121 or the second wheel 2122.

The first traveling motor is a wheel hub motor or a wheel-side motor, and the second traveling motor is a wheel hub motor or a wheel-side motor.

In the case where two traveling motors 220 are provided, the parking module 500 may be provided in one group or in two groups. For example, one parking module 500 is provided, and the parking module 500 is disposed between the first traveling motor and the first wheel 2121. By pulling the operating member 510 of the parking module 500, the operating member 510 moves from the unlocking position to the parking position, the toggle 570 is driven by the steel wire rope 540 to rotate to force the friction plate 550 to press against the brake disc 560, the brake disc 560 is disposed on the first axle 2111, and the brake disc 560 stops rotating, causing the first axle 2111 to stop rotating. The first axle 2111 stops rotating, causing the first clutch 620 to stop rotating. Since the limiting pin 640 abuts against the step 6211 in the limiting groove 621 of the first clutch 620, the first clutch 620 stops rotating to force the first traveling motor into a locked-rotor protection state, thereby shutting down the first traveling motor. Moreover, the operating member 510 can trigger the parking switch 530 when moving to the parking position, and the parking switch 530 outputs a shutdown signal or a power-off signal to the second traveling motor to shut down the second traveling motor.

Referring to FIGS. 2 to 7, the walk-behind working machine further includes a power supply assembly 700 for supplying power to the working motor 320 and the traveling motor 220. The body 100 includes the housing 110 for accommodating the power supply assembly 700. The power supply assembly 700 may adopt an existing battery pack. The weight of the walk-behind working machine is greater than or equal to 45 kg. The weight refers to the weight of the walk-behind working machine with the following components: the body 100, the traveling assembly 200, the working assembly 300, the handle device 400, and the power supply assembly 700. In some examples, the weight of the walk-behind working machine is greater than or equal to 50 kg. In some examples, the weight of the walk-behind working machine is greater than or equal to 60 kg. In some examples, the weight of the walk-behind working machine is equal to 45 kg, 48 kg, 50 kg, 52 kg, or 55 kg.

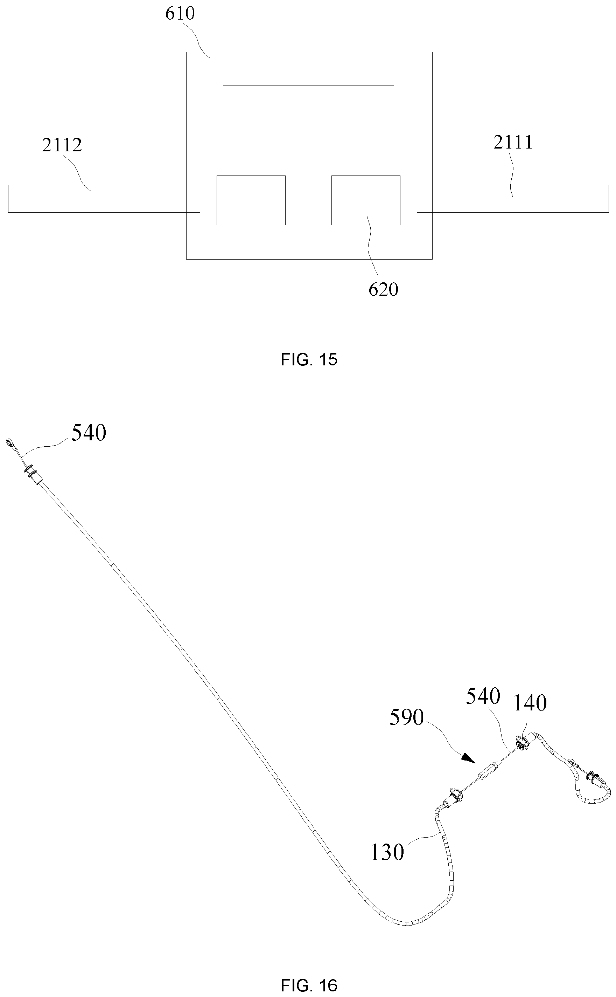

In some examples, as shown in FIG. 15, the first clutch 620 and the second clutch are both disposed inside the gearbox 610. The parking module 500 is disposed between the gearbox 610 and the first wheel 2121; or the parking module 500 is disposed between the gearbox 610 and the second wheel 2122.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A walk-behind working machine, comprising:
a traveling assembly (200) comprising a traveling wheel set (210) and a traveling motor (220) for driving the traveling wheel set, and the traveling wheel set comprises an axle (211) and at least a wheel (212) disposed on the axle;
a working assembly (300) comprising a working attachment (310) and a working motor (320) for driving the working attachment; and
a parking module (500) configured to apply a braking force to the axle.

2. The walk-behind working machine of claim 1, further comprising a transmission mechanism (600), wherein the transmission mechanism is disposed between the traveling motor and the traveling wheel set and used for transmitting power of the traveling motor to the traveling wheel set.

3. The walk-behind working machine of claim 2, wherein the transmission mechanism comprises a gearbox (610), a first clutch (620), and a second clutch, and at least one of the first clutch and the second clutch is disposed on an outer side of the gearbox.

4. The walk-behind working machine of claim 3, wherein the first clutch is disposed on the outer side of the gearbox, and the parking module is disposed between the first clutch and a first wheel (2121).

5. The walk-behind working machine of claim 2, wherein the transmission mechanism comprises a gearbox (610), a first clutch (620), and a second clutch, and the first clutch and the second clutch are both disposed inside the gearbox.

6. The walk-behind working machine of claim 5, wherein the parking module is disposed between the gearbox and a first wheel; or the parking module is disposed between the gearbox and a second wheel (2122).

7. The walk-behind working machine of claim 6, wherein two traveling motors are provided and are a first traveling motor and a second traveling motor, the first traveling motor is used for driving the first wheel, the second traveling motor is used for driving the second wheel, and the parking module is used for outputting the braking force or a wheel set braking signal to brake the first wheel or the second wheel.

8. The walk-behind working machine of claim 7, wherein the first traveling motor is a wheel hub motor or a wheel-side motor, and the second traveling motor is a wheel hub motor or a wheel-side motor.

9. The walk-behind working machine of claim 1, wherein the parking module comprises an operating member (510) configured to be operated by a user to apply the braking force or output a wheel set braking signal to the axle.

10. The walk-behind working machine of claim 9, wherein the parking module further comprises a parking switch (530), and the operating member is configured to be capable of triggering the parking switch to output a shutdown signal or a power-off signal to the traveling motor.

11. The walk-behind working machine of claim 9, wherein the parking module further comprises a friction plate (550), the operating member is configured to force the friction plate to press against a brake disc (560), and the brake disc is disposed on the axle.

12. The walk-behind working machine of claim 9, wherein the parking module further comprises an electromagnetic braking mechanism for performing a parking action according to the wheel set braking signal to lock the axle.

13. The walk-behind working machine of claim 1, further comprising a handle device (400), wherein the handle device comprises a grip for a user to hold and a self-propelled switch (420), and the self-propelled switch is used for outputting a start signal to the traveling motor.

14. The walk-behind working machine of claim 1, wherein the working attachment comprises a mowing assembly or a snow removal assembly.

15. The walk-behind working machine of claim 1, wherein the working attachment comprises a mowing assembly, the walk-behind working machine further comprises a power supply assembly (700) for supplying power to the working motor and the traveling motor, and a weight of the walk-behind working machine is greater than or equal to 45 kg.
